# FASCICULE DE BREVET EUROPEEN

(11) **EP 0 983 924 B1**
(45) Date de publication et mention de la délivrance du brevet: **08.01.2003**
(21) Numéro de dépôt: 99402122.8
(22) Date de dépôt: 26.08.1999
(51) Int. Cl.: B62D 1/04, B62D 15/02, F16C 19/52

(54) **Dispositif de volant de manoeuvre**
Lenkradanordnung
Steering wheel device

(30) Priorité: 03.09.1998 FR 9811040
(43) Date de publication de la demande: 08.03.2000
(73) Titulaire: SKF FRANCE, F-92140 Clamart (FR)
(72) Inventeur: Landrieve, Franck, 37230 Fondettes (FR)
(74) Mandataire: Dossmann, Gérard

(56) Documents cités:
- EP-A- 0 522 924
- DE-A- 19 625 350
- DE-A- 19 636 173
- DE-C- 19 634 102

## Description

La présente invention concerne le domaine des dispositifs de volants de manoeuvre utilisés par exemple pour la direction de véhicules automobiles, d'engins de manutention ou d'engins de travaux publics, ou de tous autres types d'engins ou de machines nécessitant un volant de commande.

De façon classique, un volant de manoeuvre est relié à un axe, par exemple un axe de colonne de direction, qui, suivant le type de direction utilisé, actionne directement en rotation le mécanisme de direction dans le cas d'une direction mécanique, actionne des distributeurs de pression hydraulique dans le cas d'une direction hydraulique ou, enfin, dans le cas d'une direction électrique, actionne l'anneau codeur d'un dispositif de capteur délivrant un signal au moteur électrique de commande, des combinaisons de ces trois types étant possibles.

Dans le cas d'une direction uniquement électrique, de plus en plus couramment utilisée pour des engins de manutention tels que des chariots élévateurs, l'axe sert à lier le volant à l'engin par l'intermédiaire de roulements. Un système de détection de la rotation du volant, intégré ou non aux roulements, délivre un signal représentatif de la rotation du volant à destination du dispositif d'orientation des roues du véhicule. On y ajoute généralement un système de freinage du volant destiné à générer dans celui-ci un couple résistant afin de favoriser la précision de la conduite du véhicule. Un dispositif de ce type est décrit par exemple dans le document DE-A-195 10 717.

Bien que techniquement satisfaisant, ce dispositif présente certains inconvénients d'encombrement axial et de coût en raison de la présence de deux roulements, d'un système de frein et du volant lui-même.

Le document DE C 196 34 102 (DAIMLER BENZ) décrit un dispositif de volant de direction pourvu d'un collet en saillie axiale monté sur une rangée de billes supportée par un élément annulaire de support. La surface intérieure du collet est pourvue d'une denture avec laquelle un pignon engrène. Le pignon est monté en rotation sur un axe à l'intérieur de l'élément de support.

La transmission du mouvement du volant vers l'arbre de direction peut s'effectuer par l'intermédiaire du pignon lui-même formant un transmetteur de mouvement circulaire ou par un transmetteur correspondant. Le signal correspondant peut être transmis de façon électrique de façon qu'un moteur provoque un mouvement de rotation correspondant de l'arbre de direction. Le volant de direction est dépourvu d'axe et est monté sur une rangée de billes, un chemin de roulement étant formé par le volant et un autre chemin de roulement étant formé par l'élément de support. Le moyen de roulement utilisé n'est donc pas un roulement du type standard mais de type intégré à la fois au volant et au support. Il en est de même pour le système de détection de la vitesse de rotation. Un tel dispositif est donc très spécifique à chaque application et est onéreux à fabriquer et axialement encombrant.

L'invention a pour objet de remédier aux inconvénients des dispositifs de l'art antérieur.

L'invention a pour objet un dispositif de volant de manoeuvre économique et peu encombrant tant axialement que radialement, tout en utilisant un palier à roulement standardisé.

Le dispositif de volant de manoeuvre, selon l'invention, est du type comprenant une partie de préhension et une partie de support de la partie de préhension, ladite partie de support étant montée en rotation sur un organe fixe et étant solidaire de la partie de préhension. Le dispositif de volant comprend un unique palier à roulement équipé d'un dispositif de détection des paramètres de rotation. Le palier à roulement comprend une bague tournante, une bague non tournante et des éléments roulants disposés entre ces deux bagues et au contact de celles-ci, le volant étant fixé directement à la bague tournante et la bague non tournante étant solidarisée à un boîtier fixe la supportant.

Ce type de volant est bien adapté pour la direction de véhicules automobiles et d'engins de manutention ou de travaux publics.

Dans un mode de réalisation de l'invention, la partie de support du volant comprend une partie axiale et une partie radiale, la partie axiale étant centrée sur la bague tournante. La partie axiale du volant peut être creuse.

De préférence, le dispositif de volant comprend un système de génération de couple de freinage disposé axialement entre la partie radiale du volant et un fond du boîtier.

Dans un mode de réalisation de l'invention, le système de génération de couple de freinage comprend des palettes solidaires d'une partie tournante et disposées dans une graisse à forte viscosité prévue entre les deux bagues.

Dans un autre mode de réalisation de l'invention, le système de génération de couple de freinage comprend un matériau de friction fixe ou tournant coopérant avec une surface de frottement respectivement tournante ou fixe. Le matériau de friction peut être solidaire du boîtier et la surface de frottement solidaire de la partie de support du volant. A l'inverse, le matériau de friction peut être solidaire de la partie de support du volant et la surface de frottement solidaire du boîtier.

Le boîtier peut comprendre des moyens de fixation du dispositif sur un élément de support dudit dispositif.

Dans un autre mode de réalisation, le système de génération de couple de freinage comprend un joint monté sur l'une des bagues et venant frotter sur l'autre bague du palier à roulement.

Dans un mode de réalisation de l'invention, la partie de préhension du volant et le palier à roulement sont sensiblement coplanaires.

Avantageusement, le dispositif de volant comprend un volume libre dans sa partie centrale pouvant être utilisé avantageusement pour y loger un certain nombre de systèmes ou organes annexes.

C'est ainsi que le dispositif de volant peut être équipé d'un système mécanique limitant le nombre de tours de rotation que l'utilisateur peut imprimer au volant et ramenant ce dernier en position neutre en l'absence de tout couple de manoeuvre exercé par l'opérateur. La partie centrale creuse sera avantageusement fermée par un capot solidaire d'une partie fixe ou tournante du dispositif. Ce capot pourra comporter d'autres organes liés au fonctionnement de l'engin tels que des boutons de commande ou des dispositifs d'affichage qui seront ainsi disposés dans la partie centrale du dispositif proche de l'axe de rotation du volant.

Le dispositif de volant de manoeuvre est particulièrement compact axialement par rapport aux dispositifs conventionnels. De plus, comme le palier à roulement peut avoir un diamètre nettement supérieure à ceux utilisés de façon classique, tout en restant inférieur au diamètre du volant et donc sans augmentation de l'encombrement radial, il est possible d'utiliser un capteur de forte résolution, le nombre d'impulsions délivrées par le codeur pour un angle de rotation donné étant plus élevé que pour un codeur de faible diamètre.

Dans un mode de réalisation de l'invention, le palier à roulement comprend une unique rangée d'éléments roulants disposés entre un chemin de roulement intérieur de l'une des bagues et un chemin de roulement extérieur de l'autre bague.

Le boîtier peut comprendre une partie axiale sur laquelle est centrée la bague non tournante, et un fond radial. Si la bague non tournante est intérieure, la partie axiale du boîtier sera emmanchée dans son alésage. Si la bague non tournante est extérieure, la partie axiale du boîtier sera emmanchée sur sa périphérie.

Un système de limitation du nombre de tours du volant et de rappel de ce dernier en position neutre peut être disposé dans le volume libre de sa partie centrale.

Des moyens d'affichage et de contrôle peuvent être disposés dans la partie centrale dudit dispositif.

Le grand diamètre du roulement permet d'y intégrer plus facilement un système simple de génération de couple de freinage, par friction par exemple, l'effort tangentiel de freinage nécessaire étant inversement proportionnel au diamètre par un couple donné.

La zone centrale du dispositif de volant dépourvue d'arbre plein offre un espace libre qui peut être utilisé pour y loger des systèmes ou organes annexes déjà vus plus haut.

Enfin ce dispositif de volant de manoeuvre s'adapte et se monte facilement en de nombreux emplacements possibles d'un véhicule ou d'une machine, par exemple sur un tableau de bord, par l'intermédiaire du boîtier formant support. Quelques vis suffisent à la fixation du dispositif de volant par l'intermédiaire du boîtier.

La présente invention sera mieux comprise et d'autres avantageuses apparaîtront à la lecture de la description détaillée de quelques modes de réalisation pris à titre d'exemples nullement limitatifs et illustrés par les dessins annexés, sur lesquels :
- la figure 1 est une demi-vue en coupe axiale d'un dispositif de volant de manoeuvre conforme à l'invention ;
- la figure 2 est une vue de dessus en élévation du dispositif de volant de manoeuvre conforme à l'invention ;
- les figures 3 et 4 illustrent des modes de réalisation légèrement différents de ceux de la figure 1 ; et
- la figure 5 est une vue de détail de la figure 4 montrant le joint du palier à roulement.

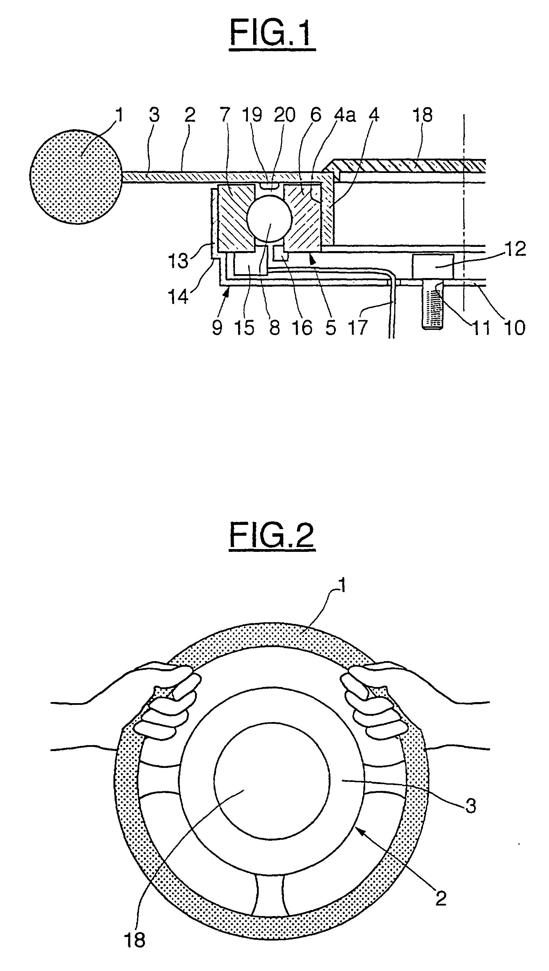

Comme on peut le voir sur la figure 1, le volant de direction comprend une partie de préhension 1 en forme de tore et solidaire d'une partie de support 2. La partie de support 2 présente une forme de coupelle avec une partie radiale 3 dont l'extrémité libre de grand diamètre supporte la partie de préhension 1 et une partie axiale 4 qui s'étend vers le bas à partir du bord intérieur de la partie radiale 3.

Le volant de manoeuvre comprend un palier à roulement 5 pourvu d'une bague intérieure tournante 6 massive, d'une bague extérieure non tournante massive 7, et d'une rangée d'éléments roulants 8, par exemple des billes disposées entre un chemin de roulement extérieur de la bague intérieure 6 et un chemin de roulement intérieur de la bague extérieure 7. La bague intérieure 6 est emmanchée sur la surface extérieure 4a de la partie axiale 4 de la partie de support 2. En variante, on pourrait prévoir des bagues en tôle. La palier à roulement 5 est un élément distinct des parties de préhension 1 et de support 2, et du boîtier 9 décrit ci-dessous, et peut être de type standard et donc peu onéreux.

Le volant comprend également un boîtier fixe de support référencé 9. Le boîtier 9 comprend un fond radial 10 percé de trous traversants 11 prévus pour recevoir des vis 12 de fixation sur l'élément prévu pour supporter le dispositif de volant, par exemple le tableau de bord d'un véhicule ou d'un engin. Le boîtier 9 comprend également une partie axiale 13 dans l'alésage de laquelle la bague extérieure 7 du roulement 5 est emmanchée. La partie axiale 13 s'étend vers le haut à partir du bord circulaire extérieur du fond radial 10 du boîtier 9. Pour permettre un positionnement satisfaisant de la bague extérieure 7 par rapport à la partie axiale 13, on prévoit un redan 14 contre lequel ladite bague extérieure 7 vient en butée dans le sens axial. Le palier à roulement 5 peut être adapté sur des types variés de boîtiers 9.

Le palier à roulement 5 comprend un dispositif intégré de détection de la vitesse de rotation pourvu d'un capteur 15 solidaire de la bague extérieure 7 et un anneau codeur 16 solidaire de la bague intérieure 6. Ce dispositif de détection de la vitesse de rotation peut être de différents types, optique, magnétique, etc. et est indépendant du boîtier 9 et des parties de préhension 1 et de support 2. Le capteur 15 et le codeur 16 sont disposés axialement entre les éléments roulants 8 et le fond radial 10 du boîtier 9 et se trouvent de ce fait bien protégés contre les agressions extérieures.

Un câble de connexion 17 muni d'un connecteur (non représenté) à une extrémité relie le capteur 15 à une unité électronique, non représentée, apte à utiliser le signal électrique portant une information sur l'angle d'orientation du volant provenant dudit capteur 15. Le câble 17 traverse le fond 10 du boîtier 9.

Le volant de manoeuvre comprend en outre un capot 18 réalisé par exemple en matériau synthétique et qui vient se monter sur la partie de support 2 à la jonction des parties radiale 3 et axiale 4, à l'opposé de la surface extérieure 4a. Le capot 18 présente la forme d'un disque circulaire ou, en variante non représentée, d'une couronne circulaire qui laisse libre un espace central à proximité de l'axe de rotation du volant. Cet espace central peut être utilisé en disposant des éléments supplémentaires qui peuvent être soit solidaires de la partie axiale 4 de la partie de support 2, soit du boîtier 9. Dans ce dernier cas, ces éléments supplémentaires peuvent être des organes de commande ou d'affichage d'autres fonctions du véhicule ou de l'engin.

Pour améliorer la précision de manoeuvre du volant, on prévoit un système de génération d'un couple de frottement. Ce système comprend des reliefs 19 disposés axialement entre la partie radiale 3 de la partie de support 2 et les éléments roulants 8 et radialement entre les bagues intérieure 6 et extérieure 7. Ces reliefs 19 peuvent se présenter sous la forme de palettes ou d'ailettes solidaires de la partie radiale 3 et en saillie vers le bas entre les deux bagues 6 et 7 du palier à roulement 5 pour coopérer avec de la graisse à forte viscosité 20 que l'on dispose dans l'espace laissé libre entre lesdites deux bagues 6 et 7 et au-dessus des éléments roulants 8. Cette graisse 20 s'opposera au mouvement des reliefs 19 et provoquera donc un accroissement du couple nécessaire à la rotation du volant de manoeuvre.

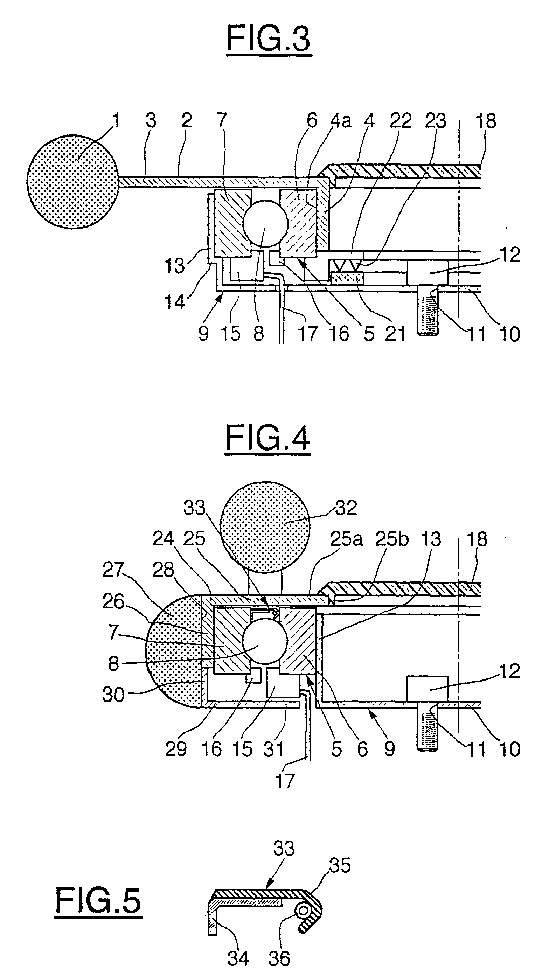

Le mode de réalisation illustré sur la figure 3 est semblable à celui illustré sur la figure 1 à ceci près que le volant est dépourvu de relief de génération de couple de frottement. On prévoit en remplacement, de disposer sur le fond radial 10 du boîtier 9 un matériau de friction 21 formé en couronne creuse. La bague intérieure 6 du palier à roulement 5 supporte un porte-garniture 22 entraînant en rotation une garniture de friction 21 et maintenant celle-ci en appui axial permanent contre le fond du boîtier, l'effort axial de pression étant fourni par une rondelle annulaire 23 à élasticité axiale. Ainsi, le porte-garniture 22 est tournant et exerce un effort axial sur le matériau de friction 21. Il en découle une force de frottement lorsqu'un opérateur tourne le volant. On génère ainsi un couple de frottement s'opposant à la rotation dudit volant.

Le mode de réalisation illustré sur la figure 4 est proche de celui de la figure 1 à ceci près que la bague intérieure 6 du palier à roulement 5 est fixe, son alésage étant emmanché sur la partie axiale 13 du boîtier 9. La partie de support 24 du volant comprend une partie radiale 25 et une partie axiale 26, la partie radiale 25 s'étendant vers l'intérieur à partir de la partie axiale 26. La partie axiale 26 s'étend vers le bas à partir de la partie radiale 25. La bague extérieure 7 du palier à roulement 5 est tournante et emmanchée dans l'alésage de la partie axiale 26. Le capot 18 est en contact avec la surface supérieure 25a et le bord intérieur 25b de la partie radiale 25.

La partie de préhension 27 du volant est de forme circulaire et présente une section en demi-cercle coupée selon un diamètre 28 parallèle à l'axe du volant et solidarisé par ledit diamètre 28 sur la surface extérieure de la partie axiale 26 de la partie de support 24 par tout moyen approprié, emmanchement, collage, vissage, etc.

La partie de préhension 27 est de longueur axiale légèrement supérieure à celle du palier à roulement 5. Son extrémité inférieure supporte un capot de protection 29 pourvu d'une portion axiale 30 en contact avec le diamètre 28 et servant de butée de positionnement axiale de la partie de la préhension 27 par rapport à la partie de support 24 en entrant en contact avec l'extrémité inférieure libre de la partie axiale 26, et une portion radiale 31 qui s'étend à partir de l'extrémité inférieure de la partie de préhension 27 vers l'intérieur de façon à protéger le capteur 15 et le codeur 16 respectivement solidaires de la bague intérieure non tournante 6 et de la bague extérieure tournante 7.

Une poignée 32 du genre à boule peut être fixée sur la surface supérieure 25a de la partie radiale 25 de la partie de support 24 en saillie vers le haut pour permettre à l'opérateur une rotation rapide du volant. Un système de génération de couple de frottement se présente sous la forme d'un joint d'étanchéité 33 visible plus en détail sur la figure 5.

Le joint d'étanchéité 33 comprend une coupelle de support 34 à section en L emmanchée sur un alésage de la bague extérieure 7 à proximité des éléments roulants 8. Sur cette coupelle 34 est surmoulée une lèvre d'étanchéité 35 qui vient en contact de frottement sur une surface extérieure circulaire de la bague intérieure 6. La lèvre 35 est serrée sur la bague intérieure 6 au moyen d'un anneau-ressort 36 de façon que ledit contact crée un couple de frottement venant s'opposer de façon adéquate au couple de rotation exercé sur le volant par un opérateur.

On voit donc que ce dernier mode de réalisation est particulièrement compact dans la mesure où la partie de préhension et la palier à roulement sont sensiblement coplanaires et où l'encombrement radial de l'ensemble formé par la partie de préhension, la partie de support et le palier à roulement est extrêmement faible ce qui libère un espace central important et permet d'utiliser un roulement de grand diamètre proche de celui de la partie de préhension d'où un accroissement de la résolution du dispositif de détection de la vitesse de rotation et une réduction des contraintes subies par le palier à roulement.

Le dispositif de volant de manoeuvre peut être monté rapidement et facilement par l'intermédiaire de son boîtier sur une machine ou un véhicule. Il suffit en effet de serrer les vis de fixation et de brancher le connecteur pour que le volant soit opérationnel.

Un même modèle de volant peut convenir sans inconvénient à plusieurs applications différentes.

Grâce à l'invention on dispose d'un volant de manoeuvre économique, de faible encombrement axial et radial tout en laissant libre un espace central et n'utilisant qu'un seul palier à roulement de type standard donc bon marché et pourvu d'une unique rangée d'éléments roulants et d'un moyen de détection des paramètres de rotation indépendant des autres pièces du volant et pouvant donc lui aussi être standardisé.

## Revendications

1. Dispositif de volant de manoeuvre, du type comprenant une partie de préhension (1) et une partie de support (2) de la partie de préhension, ladite partie de support étant montée à rotation sur un organe fixe (9) et étant solidaire de la partie de préhension, **caractérisé par le fait qu'**il comprend un unique palier à roulement (5) équipé d'un dispositif de détection des paramètres de rotation, le palier à roulement comprenant une bague tournante (6), une bague non tournante (7), et des éléments roulants (8) disposés entre lesdites bagues et au contact de celles-ci, la partie de support (2) étant directement fixée à la bague tournante (6), et la bague non tournante (7) étant solidarisée à un boîtier fixe (9) la supportant.

2. Dispositif selon la revendication 1 **caractérisé par le fait que** la partie de support (2) du volant comprend une partie axiale (4) et une partie radiale (3), la partie axiale étant centrée sur la bague tournante (6).

3. Dispositif selon la revendication 2, **caractérisé par le fait que** la partie axiale (4) du volant est creuse.

4. Dispositif selon la revendication 2 ou 3, **caractérisé par le fait qu'**il comprend un système de génération de couple de freinage disposé axialement entre la partie radiale (3) du volant et un fond du boîtier.

5. Dispositif selon la revendication 4, **caractérisé par le fait que** le système de génération de couple de freinage comprend des palettes (19) solidaires d'une partie tournante et disposées dans une graisse à forte viscosité prévue entre les deux bagues (6, 7).

6. Dispositif selon la revendication 4, **caractérisé par le fait que** le système de génération de couple de freinage comprend un matériau de friction (21) fixe ou tournant coopérant avec une surface de frottement respectivement tournante ou fixe.

7. Dispositif selon la revendication 4, **caractérisé par le fait que** le système de génération de couple de freinage comprend un joint (33) monté sur l'une des bagues (6, 7) et venant frotter sur l'autre bague.

8. Dispositif selon l'une quelconque des revendications 1 à 7, **caractérisé par le fait que** le boîtier (9) comprend des moyens de fixation du dispositif sur un élément de support dudit dispositif.

9. Dispositif selon l'une quelconque des revendications précédentes, **caractérisé par le fait que** la partie de préhension (1) du volant et la palier à roulement (5) sont sensiblement coplanaires.

10. Dispositif selon l'une quelconque des revendications précédentes, **caractérisé par le fait qu'**il comprend un volume libre dans sa partie centrale.

11. Dispositif selon l'une quelconque des revendications précédentes, **caractérisé par le fait que** le palier à roulement (5) comprend une unique rangée d'éléments roulants (8) disposés entre un chemin de roulement intérieur de l'une des bagues et un chemin de roulement extérieur de l'autre bague.

12. Dispositif suivant l'une quelconque des revendications précédentes, **caractérisé par le fait qu'**un système de limitation du nombre de tours du volant et de rappel de ce dernier en position neutre est disposé dans le volume libre de sa partie centrale.

13. Dispositif suivant l'une quelconque des revendications précédentes, **caractérisé par le fait que** des moyens d'affichage et de contrôle sont disposés dans la partie centrale dudit dispositif.

## Patentansprüche

1. Lenkradanordnung, umfassend einen Greifteil (1) und einen Stützteil (2) für den Greifteil, welcher Stützteil drehbar auf einem festen Element befestigt und mit dem Greifteil fest verbunden ist, **dadurch gekennzeichnet, dass** sie ein einziges Rollenlager (5) umfasst, das mit einer Vorrichtung zur Erfassung der Drehparameter versehen ist, wobei das Rollenlager einen Drehring (6), einen nicht drehbaren Ring (7) und Rollelemente (8) umfasst, die zwischen den Ringen und in Kontakt mit diesen angeordnet sind, und wobei der nicht drehbare Ring mit einem festen Gehäuse (9) verbunden ist, das ihn trägt.

2. Anordnung nach Anspruch 1, **dadurch gekennzeichnet, dass** der Stützteil des Lenkrades einen Axialteil (4) und einen Radialteil (3) umfasst, wobei der Axialteil auf dem Drehring zentriert ist.

3. Anordnung nach Anspruch 2, **dadurch gekennzeichnet, dass** der Axialteil des Lenkrades hohl ist.

4. Anordnung nach Anspruch 2 oder 3, **dadurch gekennzeichnet, dass** sie ein System zur Erzeugung eines Bremsmoments umfasst, das axial zwischen dem Radialteil des Lenkrades und einem Boden des Gehäuses angeordnet ist.

5. Anordnung nach Anspruch 4, **dadurch gekennzeichnet, dass** das System zur Erzeugung eines Bremsmoments Platten (19) umfasst, die mit einem Drehteil verbunden und in einem Fett starker Viskosität, das zwischen den beiden Ringen vorgesehen ist, angeordnet sind.

6. Anordnung nach Anspruch 4, **dadurch gekennzeichnet, dass** das System zur Erzeugung eines Bremsmoments ein festes oder drehendes Reibmaterial (21) umfasst, das mit einer drehenden bzw. festen Reibfläche zusammenwirkt.

7. Anordnung nach Anspruch 4, **dadurch gekennzeichnet, dass** das System zur Erzeugung eines Bremsmoments eine Dichtung (33) umfasst, die auf einem der Ringe befestigt ist und auf dem anderen Ring reibt.

8. Anordnung nach einem der Ansprüche 1 bis 7, **dadurch gekennzeichnet, dass** das Gehäuse (9) Mittel zur Befestigung der Anordnung auf einem Stützelement für die Anordnung umfasst.

9. Anordnung nach einem der vorhergehenden Ansprüche, **dadurch gekennzeichnet, dass** der Greifteil (1) des Lenkrades und das Rollenlager (5) im Wesentlichen koplanar sind.

10. Anordnung nach einem der vorhergehenden Ansprüche, **dadurch gekennzeichnet, dass** sie ein freies Volumen in ihrem Mittelteil umfasst.

11. Anordnung nach einem der vorhergehenden Ansprüche, **dadurch gekennzeichnet, dass** das Rollenlager (5) eine einzige Reihe von Rollelementen (8) umfasst, die zwischen einem inneren Rollengang eines der Ringe und einem äußeren Rollengang des anderen Ringes angeordnet sind.

12. Anordnung nach einem der vorhergehenden Ansprüche, **dadurch gekennzeichnet, dass** ein System zur Begrenzung der Umdrehungszahl des Lenkrades und zur Rückstellung dieses letztgenannten in die neutrale Position in dem freien Volumen in ihrem Mittelteil vorgesehen ist.

13. Anordnung nach einem der vorhergehenden Ansprüche, **dadurch gekennzeichnet, dass** Anzeige- und Kontrollmittel in dem Mittelteil der Anordnung vorgesehen sind.

## Claims

1. Steering wheel device of the type comprising a part (1) for holding and a part (2) for supporting the part for holding, the said support part being mounted so as to rotate on a fixed member (9) and being secured to the part for holding, **characterized in that** it comprises a single rolling bearing (5) equipped with a device for detecting rotation parameters, the rolling bearing comprising a rotating ring (6), a non-rotating ring (7), and rolling bodies (8) arranged between the said rings and in contact therewith, the support part (2) being fixed directly to the rotating ring (6) and the non-rotating ring (7) being secured to a fixed casing (9) supporting it.

2. Device according to Claim 1, **characterized in that** the support part (2) of the steering wheel comprises an axial part (4) and a radial part (3), the axial part being centred on the rotating ring (6).

3. Device according to Claim 2, **characterized in that** the axial part (4) of the steering wheel is hollow.

4. Device according to Claim 2 or 3, **characterized in that** it comprises a system for generating braking torque arranged axially between the radial part (3) of the steering wheel and an end wall of the casing.

5. Device according to Claim 4, **characterized in that** the system for generating braking torque comprises paddles (19) secured to a rotating part and arranged in a high-viscosity grease provided between the two rings (6, 7).

6. Device according to Claim 4, **characterized in that** the system for generating braking torque comprises a fixed or rotating friction material (21) collaborating with a friction surface which is rotating or fixed, respectively.

7. Device according to Claim 4, **characterized in that** the system for generating braking torque comprises a seal (33) mounted on one of the rings (6, 7) and rubbing against the other ring.

8. Device according to any one of Claims 1 to 7, **characterized in that** the casing (4) comprises means for fixing the device to an element for supporting the said device.

9. Device according to any one of the preceding claims, **characterized in that** the steering wheel part (1) for holding and the rolling bearing (5) are roughly coplanar.

10. Device according to any one of the preceding claims, **characterized in that** it comprises a free volume in its central part.

11. Device according to any one of the preceding claims, **characterized in that** the rolling bearing (5) comprises a single row of rolling bodies (8) arranged between an inner raceway of one of the rings and an outer raceway of the other ring.

12. Device according to any one of the preceding claims, **characterized in that** a system for limiting the number of turns of the steering wheel and for returning the latter to a neutral position is arranged in the free volume of its central part.

13. Device according to any one of the preceding claims, **characterized in that** display and control means are arranged in the central part of the said device.
